# EUROPEAN PATENT SPECIFICATION

(11) **EP 1 864 895 B1**
(45) Date of publication and mention of the grant of the patent: **15.12.2010**
(21) Application number: 07252320.2
(22) Date of filing: 08.06.2007
(51) Int. Cl.: B62J 1/12, B62J 11/00, B62K 19/46

(54) **Motorcycle**
Motorrad
Motocyclette

(30) Priority: 09.06.2006 JP 2006160438; 16.03.2007 JP 2007068938; 21.05.2007 JP 2007134716
(43) Date of publication of application: 12.12.2007
(73) Proprietor: Yamaha Hatsudoki Kabushiki Kaisha, Iwata-shi, Shizuoka 438-8501 (JP)
(72) Inventor: Imamura, Mitsutoshi, Iwata-shi, Shizuoka-ken 438-8501 (JP); Ichihara, Hisashi, Iwata-shi, Shizuoka-ken 438-8501 (JP); Hirakawa, Nobuhiko, Iwata-shi, Shizuoka-ken 438-8501 (JP); Koshimizu, Mitsuru, Iwata-shi, Shizuoka-ken 438-8501 (JP)
(74) Representative: Lamb, Martin John Carstairs

(56) References cited:
- EP-A- 1 418 117
- EP-A1- 0 404 194
- EP-A1- 1 245 481
- JP-A- 10 203 443
- JP-A- 10 236 357
- US-B1- 6 336 579

## Description

### FIELD OF THE INVENTION

The present invention relates to a motorcycle which has a main seat rotatable around a front end of a storage space disposed on a body frame, and a tandem seat rotatable around a rear end of the storage space.

### BACKGROUND TO THE INVENTION

According to an example of scooter-type motorcycles currently proposed, a storage box is disposed below a main seat with the front end of the main seat rotatably supported upward and downward, a fuel tank is disposed below a tandem seat with the rear end of the tandem seat rotatably supported upward and downward. Such an arrangement is disclosed in prior art reference JP-A-11-208548.

This type of motorcycle known in the art has the storage box positioned below the main seat, and the fuel tank positioned below the tandem seat. According to this structure, limitation is imposed on the capacity of the storage box in the front-rear direction. In this case, it is difficult to accommodate a long article in the storage box.

The invention has been developed to solve this problem. It is an object of the invention to provide a motorcycle capable of accommodating a long article by increasing storage box capacity in the front-rear direction.

EP 0404194 and JP 10-236357 disclose a motorcycle with an under-seat storage space. The seat includes a front seat which is arranged to pivot in a front region of the storage space and a tandem seat which is arranged to pivot in a rear region of the storage space.

US 6,336,579 discloses a motorcycle with a helmet storage area. The rear seat is mounted on the motorcycle via a pivoting link mechanism so that the rear seat can be pivoted to open a front region of the helmet storage area.

EP 1245481 discloses a motorcycle with a seat which is arranged to accommodate a main rider and a passenger. The entire seat pivots about a front region thereof to open an under-seat storage area.

EP 1418117 discloses a motorcycle with an under-seat storage compartment. The seat is split into a front portion and a rear portion. Only the front portion can be maneuvered by pivoting about a front end thereof to open the storage compartment.

JP 10-203443 discloses a motorcycle with an under-seat storage compartment. The seat can be pivoted to one side to open the storage compartment.

### SUMMARY OF THE INVENTION

Various aspects of the present invention are defined in the independent claim 1. Some preferred features are defined in the dependent claims.

According to a first aspect of the present invention, there is provided a motorcycle, comprising:
a storage space;
a main seat rotatable around a front rotation axis positioned at a front end of the storage space;
a tandem seat rotatable around a rear rotation axis positioned at a rear end of the storage space; and
the main seat is adapted to open and close an opening of a front region of the storage space and the tandem seat is adapted to open and close an opening of a rear region of the storage space, and a rear end of the main seat covers a front end of the tandem seat when both the main seat and the tandem seat are in a closed position and a rear bottom plate is provided in a front region of a seat bottom plate of the tandem seat, a front edge of the rear bottom plate projects beyond the front end of the tandem seat and a seal member is provided between the main seat and the front edge of the rear bottom plate to seal therebetween with pressure.

The storage space may define a front storage area positioned in a front area of the vehicle, and a rear storage area positioned in a rear area of the vehicle, wherein the main seat is adapted to open and close an opening of the front storage area and the tandem seat is adapted to open and close an opening of the rear storage area.

When both the main seat and the tandem seat are in an open position, the openings of the front and rear storage areas may collectively define a single opening. Both the front and rear rotation axes preferably extend in a vehicle width direction.

The length from the front rotation axis to the rear end of the main seat may be larger than the length from the rear rotation axis to the front end of the tandem seat. The front rotation axis may be located at a lower position than the rear rotation axis.

The motorcycle may further comprise a lock device provided at least on the main seat and adapted to lock the main seat and the tandem seat in a closed position. The lock device may be adapted to lock at least one of the main seat and the tandem seat to the vehicle body.

Advantageously, an operation member may be provided and connected to the lock device and adapted to operate said lock device.

The lock device may be disposed on or near the side of the storage space in the vehicle width direction.

The lock device may comprise first lock units disposed on or near both left and right sides of the storage space in the vehicle width direction, wherein the lock units are adapted to lock the tandem seat to the vehicle body.

The lock device may comprise second lock units disposed on or near both right and left sides of the storage space in the vehicle width direction and adapted to lock the main seat to the vehicle body, wherein the left lock unit and the right lock unit of the second lock units are connected with each other via a connecting member.

A bracket preferably defines a grab bar adapted to be grabbed by a rider sitting on the tandem seat and the tandem seat is rotatably attached to the grab bar. The grab bar may comprise a leg disposed below the tandem seat and fixed to the body frame and the left and right first lock units may be fixed to the lower surface of the leg.

The tandem seat, a hinge bracket that supports the tandem seat, and the grab bar are preferably adapted to be preassembled to define an assembly body, wherein the assembly body adapted to be attached to the body frame.

The motorcycle may further comprise a waterproof structure between a rear end of the main seat and a front end of the tandem seat.

The motorcycle may further comprise a lower extension extending downward from a bottom plate of the tandem seat and an upper extension extending upward from a rear portion of the storage space, wherein the lower extension and the upper extension are overlapped with each other producing an overlapping portion in the vehicle width direction when the tandem seat is in a closed position.

The tandem seat may comprise a seat supporting mechanism adapted to hold the tandem seat in an open self-position. The seat supporting mechanism may comprise a maintaining mechanism adapted to maintain a self-supporting condition of the tandem seat when the tandem seat is rotated to the open self-position, and a releasing mechanism adapted to release the self-supporting condition of the tandem seat when the tandem seat is rotated beyond the open self-position. The maintaining mechanism may comprise a hinge bracket adapted to support the tandem seat, a stand rotatably supported by the hinge bracket, a torsion spring adapted to urge the stand to a standing position or a lying position, and a stopper engaging with the stand, wherein the torsion spring is adapted to urge the stand to the standing position when the position of the tandem seat lies within the angle range from the open self-position to a full-close position.

The releasing mechanism may comprise the torsion spring adapted to urge the stand to the standing position or the lying position and a lever adapted to switch the urging direction of the torsion spring, and a guide for guiding the lever, wherein the torsion spring is adapted to urge the stand to the lying position when the lever is rotated to a releasing position and adapted to urge the stand to the standing position when the lever is rotated to a standing position.

According to the motorcycle of the invention, the opening front region of the storage space is opened and closed by the main seat rotatable around the front end of the storage space, and the opening rear region of the storage space is opened and closed by the tandem seat rotatable around the rear end of the storage. In this case, the storage space extends through substantially the entire length of the main seat and the tandem seat in the front-rear direction, and thus produces a sufficient space for accommodating a long article.

### BRIEF DESCRIPTION OF THE DRAWINGS

These and other aspects of the present invention will now be described, by way of example only, with reference to the appended drawings, in which:
Fig. 1 is a side view of a motorcycle in an embodiment according to the invention;
Fig. 2 is a cross-sectional side view of a storage box mounted on the motorcycle;
Fig. 3 is a side view of a main seat placed on the storage box;
Fig. 4 is a plan view of the storage box on which the main seat is placed;
Fig. 5 is a cross-sectional view taken along a line V-V in Fig. 4;
Fig. 6 is a cross-sectional view taken along a line VI-VI in Fig. 3;
Fig. 7 is a cross-sectional view taken along a line VII-VII in Fig. 4;
Fig. 8 is a cross-sectional view taken along a line VIII-VIII in Fig. 4;
Fig. 9 is a side view of a tandem seat placed on the storage box;
Fig. 10 is a plan view of the storage box on which the tandem seat is placed;
Fig. 11 is a cross-sectional view taken along a line XI-XI in Fig. 9;
Fig. 12 is a cross-sectional view taken along a line XII-XII in Fig. 10;
Fig. 13 is a cross-sectional view taken along a line XIII-XIII in Fig. 10;
Fig. 14 is a cross-sectional view taken along a line XIV-XIV in Fig. 10;
Fig. 15 is a cross-sectional view taken along a line XV-XV in Fig. 9;
Fig. 16 is a cross-sectional view taken along a line XVI-XVI in Fig. 9;
Fig. 17 illustrates a full-close condition of the seat;
Fig. 18 is a side view of a seat supporting mechanism of the tandem seat;
Fig. 19 illustrates opening operation of the tandem seat; and
Fig. 20 illustrates closing operation of the tandem seat.

### DETAILED DESCRIPTION OF THE INVENTION

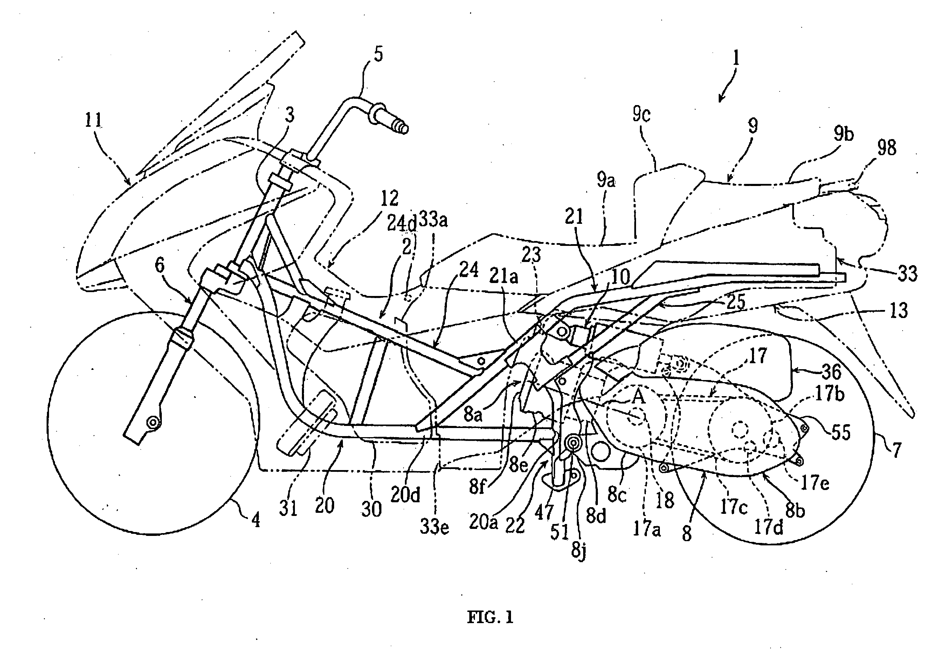

Figs. 1 through 20 illustrate a motorcycle in an embodiment according to the invention. The front-rear direction and the left-right direction in this embodiment refer to the front-rear direction and the left-right direction as viewed by a person sitting on a seat of the motorcycle.

The figures show a scooter-type motorcycle 1. The motorcycle 1 is supported by a body frame 2 and a head pipe 3 is positioned at the front end of the body frame 2 such that the motorcycle 1 can be steered to the left and right. The motorcycle 1 includes a front fork 6 having a front wheel 4 at the lower end and a steering handle 5 at the upper end. A unit swing type engine unit 8 supports a rear wheel 7 at the rear end thereof, wherein the front end of the engine unit 8 is supported by the vehicle frame 2 such that the engine unit 8 can swing upward and downward. A storage box 33 supported by the body frame 2 and extends in the front-rear direction, and a saddle-type seat 9 is disposed on the body frame 2 above the engine unit 8.

The front and rear parts of the front fork 6 are covered by a front cover 11 and a leg shield 12, respectively. The lower periphery of the seat 9 is covered by a side cover 13.

The body frame 2 has a pair of left and right down tubes 20, 20 extending downward toward the rear from the lower end of the head pipe 3 while expanding outward in the vehicle width direction and therefrom extending toward the rear substantially in the horizontal direction, a pair of left and right seat rails 21, 21 extending diagonally upward toward the rear from center portions 20d of the left and right down tubes 20 in the front-rear direction, a pair of left and right engine suspension frames 22, 22 extending in the vertical direction from rear end faces 20a of the left and right down tubes 20 with the upper ends of the engine suspension frames 22 connected with the seat rails 21, and a cross member 23 connecting respective portions of the left and right seat rails 21 in the vicinity of connecting portions 21a between the seat rails 21 and the engine suspension frames 22 in the vehicle width direction.

The body frame 2 has left and right upper tubes 24, 24 extending diagonally downward toward the rear from the head pipe 3 substantially in a linear manner and having rear end faces connected with the seat rails 21, and left and right seat stays 25, 25 connecting the left and right engine suspension frames 22 and the rear portions of the seat rails 21.

Left and right pivot members 47 are disposed on the rear faces of the engine suspension frames 22, 22 in the vicinity of the connecting positions between the engine suspension frames 22 and the down tubes 20.

The engine unit 8 has an engine main body 8a, and a transmission case 8b containing a belt chamber for accommodating a V-belt type continuously variable transmission 17. The engine main body 8a and the transmission case 8b are coupled into one body.

The engine main body 8a is a water-cooled four-stroke single-cylinder engine mounted with its cylinder axis A disposed approximately in the horizontal direction. A cylinder block 8d, a cylinder head 8e, and a head cover 8f are sequentially connected on the front fitting face of a crank case 8c which accommodates a crank shaft 18 extending horizontally in the vehicle width direction.

The V-belt type continuously variable transmission 17 has a drive pulley 17a disposed at the left end of the crank shaft 18 projecting into the transmission case 8b, and a driven pulley 17b disposed at the rear end of the transmission case 8b and connected with the drive pulley 17a by a V belt 17c. A main shaft 17d and a drive shaft 17e to which the rotation of the driven pulley 17b is transmitted are provided within the transmission case 8b. The rear wheel 7 is attached to the drive shaft 17e.

Left and right suspension members 8j, 8j project toward the front from the lower wall of the crank case 8c. The left and right suspension members 8j are supported by the pivot members 47 via a pivot shaft 51. Thus, the engine unit 8 is suspended in such a manner as to swing upward and downward with its fulcrum located at the lower portion of the crank case 8c.

A rear arm 55 is disposed at a position opposite to the engine unit 8 with the rear wheel 7 interposed between the rear arm 55 and the engine unit 8. The front end of the rear arm 55 is fixed to the engine unit 8, and the rear end of the rear arm 55 supports the rear wheel 7.

The rear arm 55 is connected with the cross member 23 by a rear suspension 10 extending in the front-rear direction of the vehicle as a substantially horizontal component. The rear suspension 10 is disposed above the engine unit 8 in such a condition as to extend in a direction substantially parallel with the cylinder axis A of the engine unit 8 as viewed from the side of the vehicle.

An air cleaner 36 is fixed to the upper wall surface of the transmission case 8b. The air cleaner 36 can swing upward and downward with the transmission case 8b. The length of the air cleaner 36 in the front-rear direction coincides with approximately the entire length of the transmission case 8b.

A fuel tank 30 is positioned within a space surrounded by the left and right down tubes 20 and the left and right upper tubes 24. A radiator 31 is equipped below the fuel tank 30.

The storage box 33 open to above is disposed within a space surrounded by the left and right down tubes 20, the seat rails 21, and the engine suspension frames 22 in such a position as to be located behind the fuel tank 30. The storage box 33 is fixed to the body frame 2.

The storage box 33 has a length coinciding with approximately the entire length of the seat 9 in the front-rear direction. An opening 33a of the storage box 33 is formed to connect an opening of a front storage area 33b, an opening of an intermediate storage area 33d, and an opening of a rear storage area 33c, and is located at a position higher than the positions of the upper tubes 24 and the seat rails 21. When both a main seat 9a and a tandem seat 9b to be described later are opened, these openings 33b, 33d and 33c are opened as one opening. When both the main seat 9a and the tandem seat 9b are closed, the rear end of the main seat 9a covers the front end of the tandem seat 9b from above.

The storage box 33 has the front storage area 33b having a sufficient space for accommodating a helmet H1, and the rear storage area 33c having a sufficient space for accommodating a helmet H2, an attaché case W1, or a beer case W2, and the intermediate storage area 33d formed between the front and rear storage areas 33b and 33c and having a sufficient space for accommodating a long article W3 when the intermediate storage area 33d is used jointly with the front and rear storage areas 33b and 33c.

The front storage area 33b extends downward from the intermediate storage area 33d, and the rear storage area 33c extends upward from the intermediate storage area 33d.

A battery storage area 33e extends downward from the bottom wall of the front storage area 33b. The battery storage area 33e is positioned between the engine unit 8 and the fuel tank 30, and projects downward to a position below the down tubes 20. A tool storage area 33f is formed between the battery storage area 33e and the front storage area 33b.

The seat 9 has the main seat 9a on which a rider sits, the tandem seat 9b on which a rear rider sits, and a back rest 9c disposed at the rear end of the main seat 9a for supporting the lower back of the rider.

The main seat 9a has a seat cushion 85b carried on a seat bottom plate 85a and a seat surface 85c covering the seat cushion 85b. The tandem seat 9b is formed separately from the main seat 9a, and has a seat cushion 86b carried on a seat bottom plate 86a and a seat surface 86c covering the seat cushion 86b.

The seat bottom plates 85a and 86a are convex or bowl-shaped components expanding to above from the open area 33a of the storage box 33. These shapes increase the capacity of the storage box 33.

The main seat 9a is supported in such a manner as to be rotatable upward and downward around the front end of the storage box 33. The tandem seat 9b is supported in such a manner as to be rotatable upward and downward around the rear end of the storage box 33.

The main seat 9a covers the front storage area 33b and the intermediate storage area 33d of the storage box 33, that is, the front region of the storage box 33 is opened and closed by the seat bottom plate 85a of the main seat 9a. The tandem seat 9b covers the rear storage area 33c of the storage box 33, that is, the rear region of the storage box 33 is opened and closed by the seat bottom plate 86a of the tandem seat 9b. The whole area of the opening 33a of the storage box 33 is exposed to above when the main seat 9a and the tandem seat 9b are opened toward the front and rear.

The seat bottom plate 85a of the main seat 9a has a front half 85a' covering an opening 33a' of the front storage area 33b, and a rear half 85a" extending upward toward the rear from the rear end of the front half 85a' and covering an opening 33a" of the intermediate storage area 33d and the front region of an opening 33a"' of the rear storage area 33c. Thus, the long article and the article accommodated in the rear storage area 33c can be taken in and out by opening the main seat 9a with the tandem seat 9b closed.

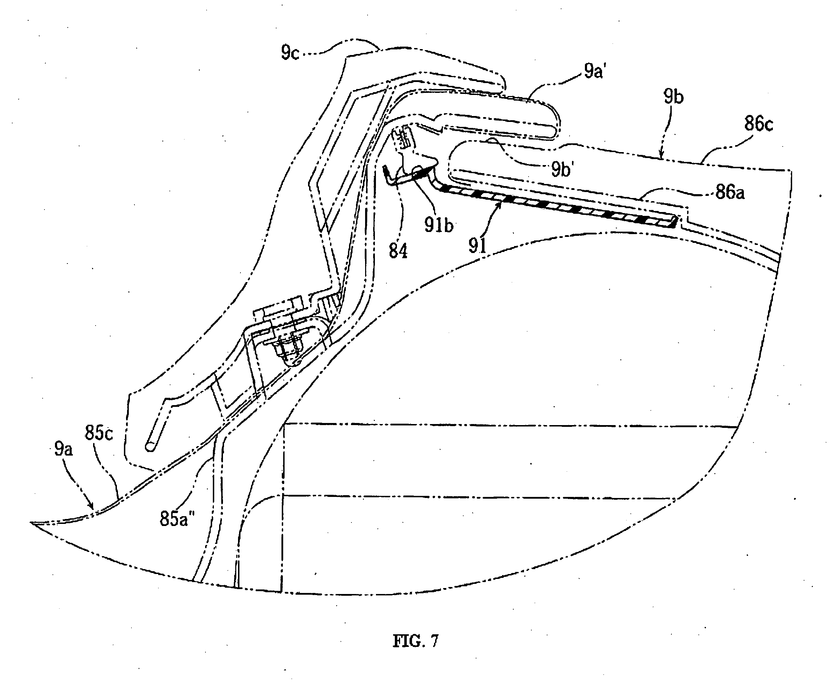

A rear edge 9a' of the main seat 9a covers the upper portion and the left and right sides of a front edge 9b' (see Fig. 7) of the tandem seat 9b to improve the external appearance of the boundary between the main seat 9a and the tandem seat 9b.

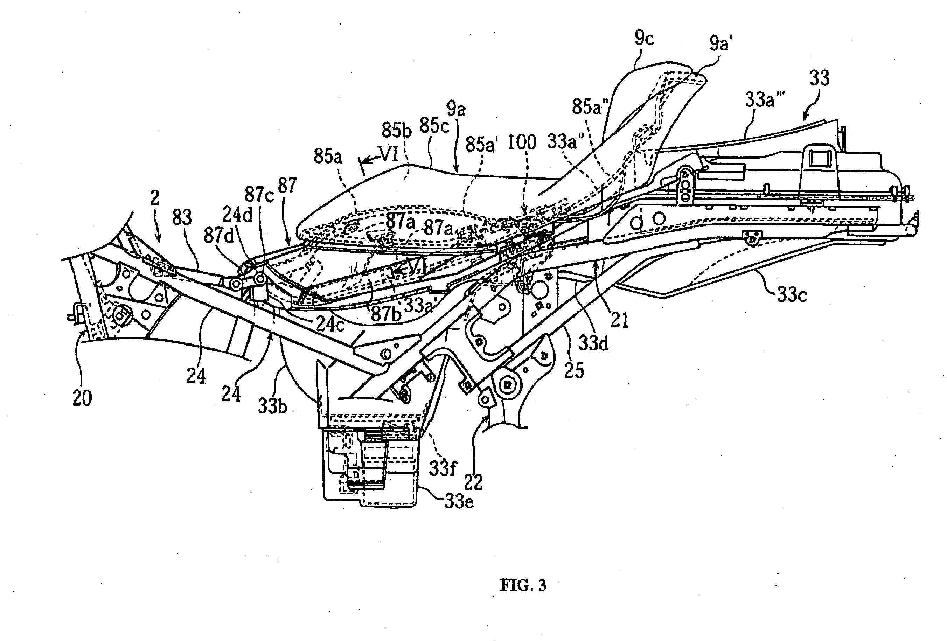

A bottom plate 87 (see Fig. 3) is disposed before the seat bottom plate 85a of the main seat 9a. The bottom plate 87 forms an almost continuous surface from the seat bottom plate 85a, and is fixed to the seat bottom plate 85a by a plurality of bolts 87a.

The bottom plate 87 has expanding portions 87b expanding outward from the front edge and the left and right edges of the main seat 9a. The expanding portions 87b are inserted under the side cover 13 so as not to be visible from the outside, and cover the opening 33a' of the front storage area 33b.

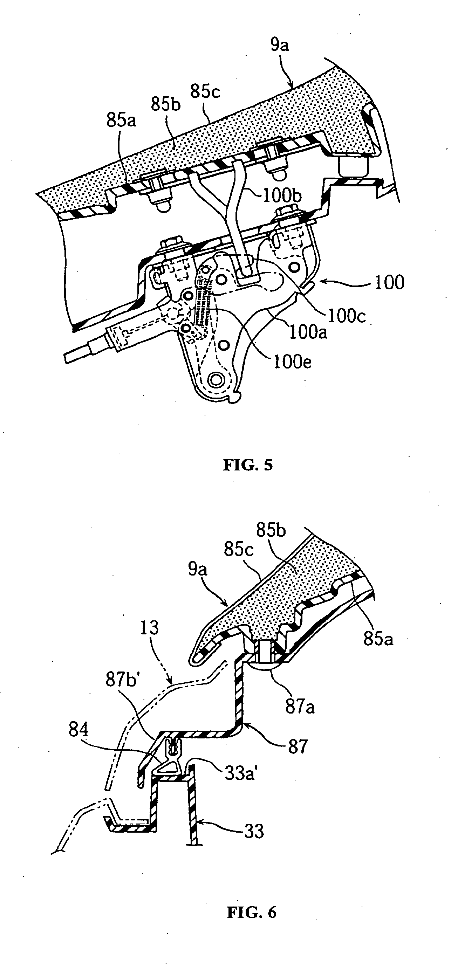

A seal member 84 (see Figs. 6 and 7) is attached to the lower surfaces of the expanding portions 87b and the seat bottom plate 85a along their outer edges. The seal member 84 contacts the openings 33a' and 33a" with pressure to seal the clearance between the openings 33a' and 33a" and the main seat 9a.

A pair of left and right hinges 87c, 87c (see Fig. 3) project to the front from the front edges of the expanding portions 87b. A hinge bracket 24c extends between the left and right upper tubes 24 to connect therewith. The left and right hinges 87c are supported by the hinge bracket 24c via a hinge pin (front rotation axis) 24d extending in the vehicle width direction. Thus, the main seat 9a is rotatable upward and downward around the hinge pin 24d positioned before the front edge of the main seat 9a.

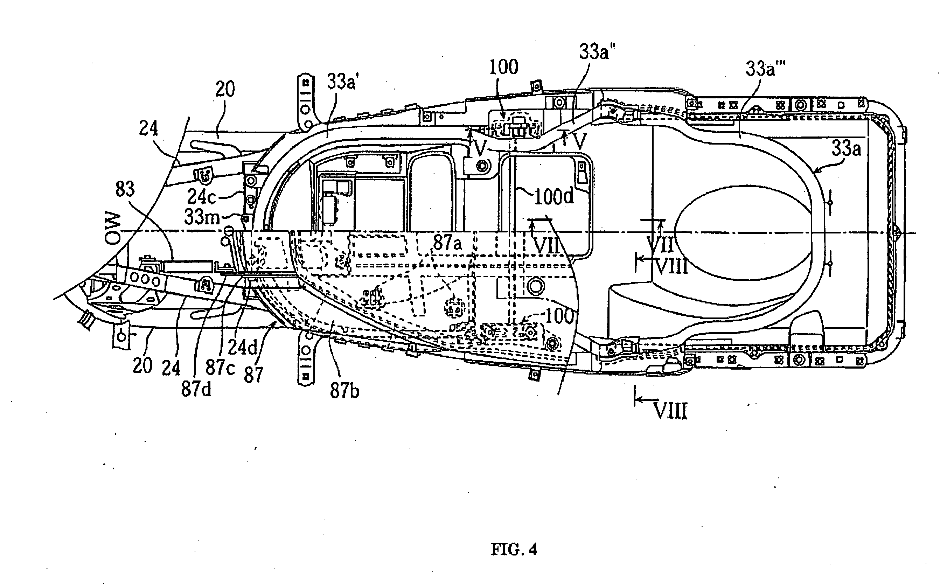

A positioning boss 33m (see Fig. 4) projects upward from the front edge of the storage box 33. The positioning boss 33m is inserted into a positioning hole (not shown) formed on the hinge bracket 24c. Thus, the storage box 33 and the main seat 9a are positioned and supported by the hinge bracket 24c.

The expanding portions 87b have left and right stoppers 87d, 87d projecting toward the front from the hinges 87c. The stoppers 87d are connected with stopper rods 83, 83 attached to the left and right upper tubes 24. When the main seat 9a is open, the stoppers 87d engage with the stopper rods 83 to limit the opening of the main seat 9a at the full-open position. The full-open position of the main seat 9a is set at about 40 degrees from the substantially horizontal plane so as to prevent interference between the main seat 9a and equipment attached to the steering handle 5.

Left and right main lock units (second lock units) 100, 100 for locking the main seat 9a to the vehicle body are provided on the left and right sides of the main seat 9a. The left and right main lock units 100 are disposed at the central portion of the main seat 9a in the front-rear direction.

As illustrated in Fig. 5, the main lock units 100 have lock members 100a, 100a secured to the outer wall of the opening 33a of the storage box 33, and strikers 100b, 100b fixed to the seat bottom plate 85a of the main seat 9a and extending downward. Engaging claws 100c are supported by the lock members 100a in such a condition as to be rotatable between locking position and unlocking position. The engaging claws 100c are urged in the locking direction by coil springs 100e. The left and right engaging claws 100c are connected by a connecting member 100d.

When the main seat 9a is rotated to the full-close position, the left and right strikers 100b engage with the engaging claws 100c to lock the main seat 9a to the storage box 33. Though not shown in the figure, the left and right engaging claws 100c are simultaneously rotated to the unlocking position via the connecting member 100d by the lock release operation using a key (not shown). By the rotation of the engaging claws 100c, the locked condition of the main seat 9a is released.

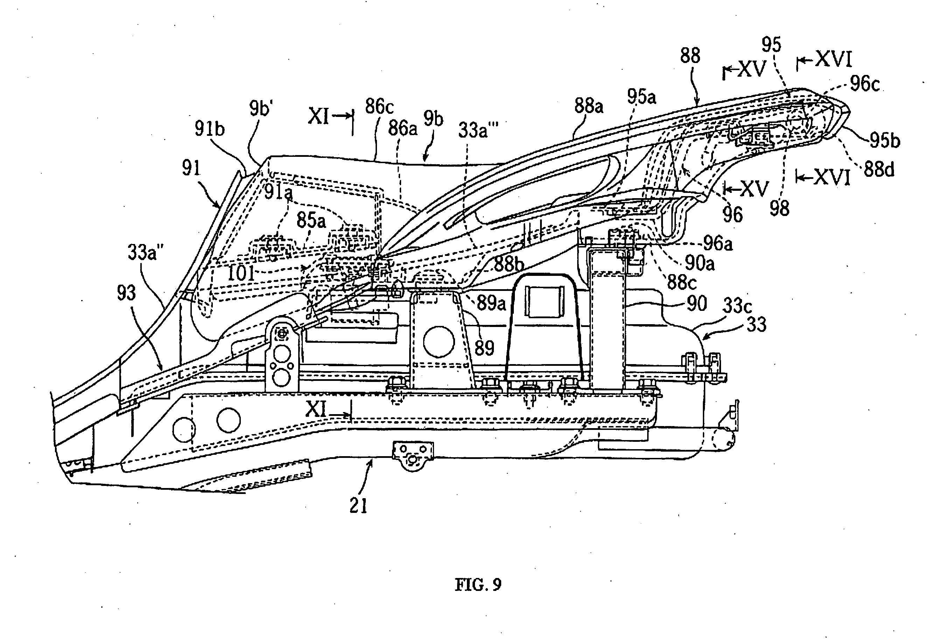

The tandem seat 9b is disposed at a position higher than the main seat 9a. A rear bottom plate 91 is provided in the front region of the seat bottom plate 86a of the tandem seat 9b. The rear bottom plate 91 is shaped along the seat bottom plate 86a, and fixed to the seat bottom plate 86a by a plurality of bolts 91a (see Fig. 9).

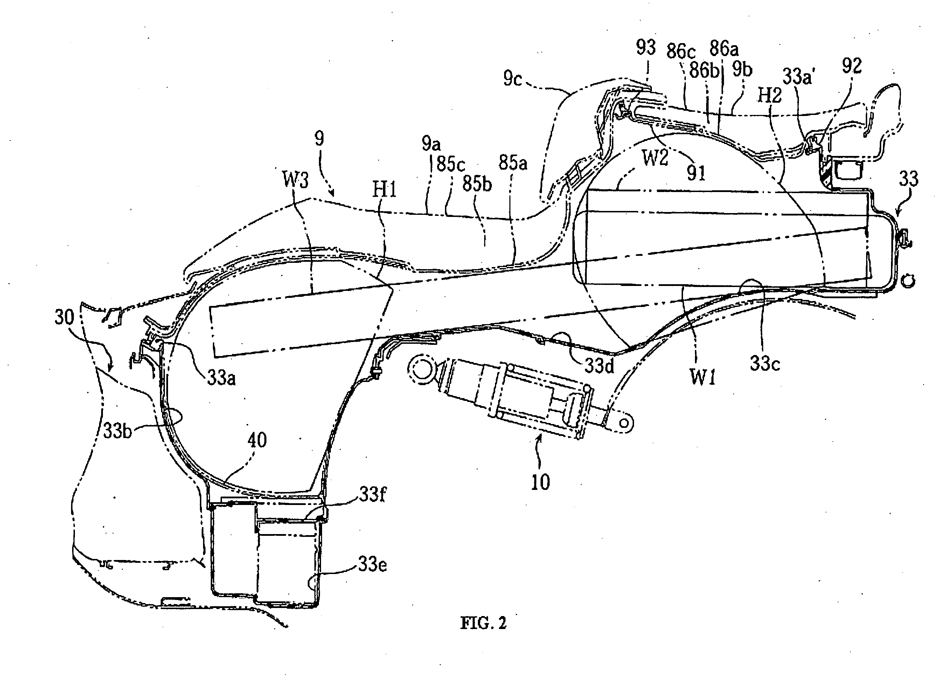

A seal member 92 (see Fig. 2) is attached along the outer edges of the rear bottom plate 91 and the seat bottom plate 86a. The seal member 92 contacts the opening 33a''' of the rear storage area 33c with pressure to seal the clearance between the open area 33a''' and the tandem seat 9b.

A front edge 91b (see Fig. 7) of the rear bottom plate 91 projects beyond the front edge 9b' of the tandem seat 9b. The seal member 84 attached to the rear edge 9a' of the main seat 9a contacts the front edge 91b with pressure.

The left and right sides of the rear edge 9a' of the main seat 9a overlap with the left and right sides of the front edge 9b' of the tandem seat 9b in the vehicle width direction. A waterproof structure is provided on an overlapping portion W of the rear edge 9a' and the front edge 9b'.

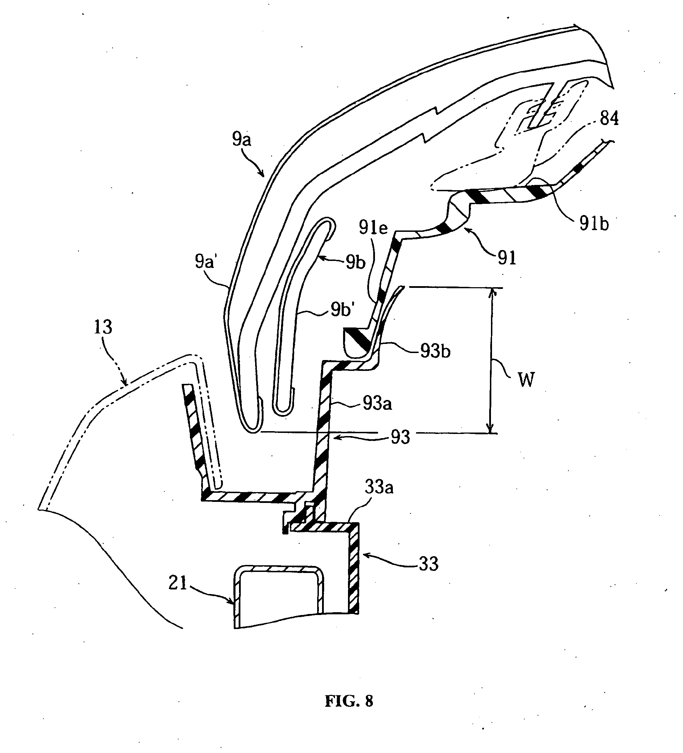

As illustrated in Fig. 8, a gutter-shaped receiver 93 extending downward toward the front is equipped in the opening 33a of the storage box 33. The rear edge 9a' and the front edge 9b' are disposed within the receiver 93.

An upper extension 93b extending to the vicinity of the upper end of the overlapping portion W is formed on an inner wall 93a of the receiver 93 with a step produced toward the inside. A lower extension 91e extending to overlap with the outer side of the upper extension 93b in the vehicle width direction is formed on the front edge 91b of the rear bottom plate 91. This structure prevents entrance of water or the like from the seal change portion between the main seat 9a and the tandem seat 9b into the storage box 33.

The tandem seat 9b has a grab bar 88 (see Fig. 9) to be grabbed by the rider sitting on the tandem seat 9b.

The grab bar 88 has a substantially U-shape as viewed from above surrounding the left and right sides and the rear of the tandem seat 9b. The grab bar 88 is located at a higher position than the opening 33a of the storage box 33 as viewed from the side, and extends from the rear end of the opening 33a toward the rear.

The grab bar 88 has left and right grab portions 88a, 88a disposed on the left and right sides of the tandem seat 9b, a connecting portion 88d for connecting the rear ends of the left and right grab portions 88a, 88a, and left and right front legs 88b, 88b and left and right rear legs 88c, 88c extending from the front and rear lower edges of the left and right grab portions 88a to enter under the left and right sides of the tandem seat 9b.

The left and right front legs 88b are fixed to a gate-shaped rear upper bracket 89 connected with the left and right seat rails 21 by bolts 89a, 89a inserted from above. The left and right rear legs 88c are fixed to a gate-shaped cross bar 90 connected with the seat rails 21 by bolts 90a, 90a inserted from above. This structure provides sufficient strength against forces applied to the grab bar 88 in the vertical direction at the time of acceleration or braking.

Left and right tandem lock units (first lock units) 101, 101 for locking the tandem seat 9b to the vehicle body are provided on the left and right sides of the tandem seat 9b. The left and right tandem lock units 101 are positioned at the central portion of the tandem seat 9b in the front-rear direction.

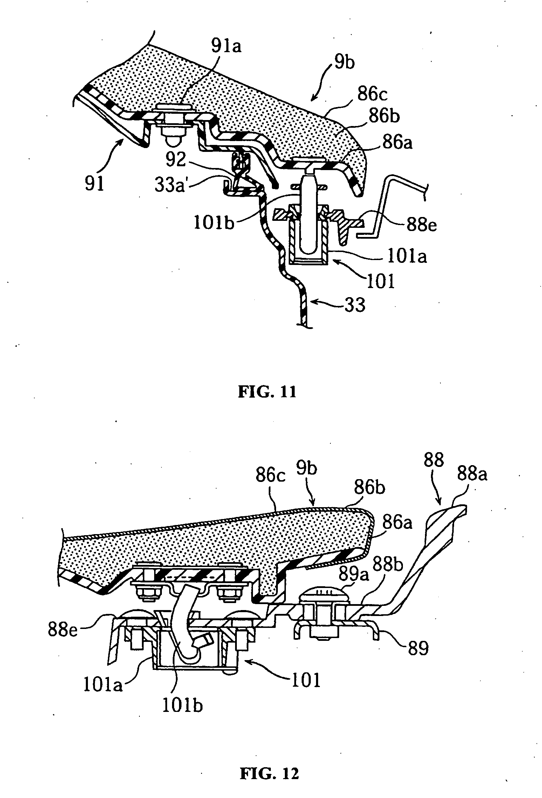

As illustrated in Figs. 11 and 12, the tandem lock units 101 have left and right lock members 101a, 101a disposed outside the opening 33a of the storage box 33, and left and right strikers 101b, 101b fixed to the seat bottom plate 86a of the tandem seat 9b. The basic structure of the tandem lock units 101 is substantially identical to that of the main lock units 100.

The left and right lock members 101a are fixed to the lower surfaces of extensions 88e extended toward the front from the left and right front legs 88b of the grab bar 88 by bolt. The left and right lock members 101a are connected with each other by a wire member (not shown). When the tandem seat 9b is rotated to the full-close position, the left and right strikers 101b engage with the lock members 101a. As a result, the tandem seat 9b is locked to the grab bar 88.

The left and right main lock units 100 are connected with the left and right tandem lock units 101 by lock release members (not shown). When lock release operation is executed using a key, the locked conditions of the left and right main lock units 100 and the left and right tandem lock units 101 are simultaneously released by the lock release members.

A tail cover 95 as an external component is disposed between the rear end surface of the tandem seat 9b and the grab bar 88. A front end 95a of the tail cover 95 is inserted under the tandem seat 9b, and fixed to the seat bottom plate 86a by bolt.

The tail cover 95 (see Fig. 9) rises upward from the rear edge of the tandem seat 9b, and then extends toward the rear forming a continuous surface from the grab bar 88. A rear end 95b is curved in such a manner as to cover the upper and rear regions of the connecting portion 88d.

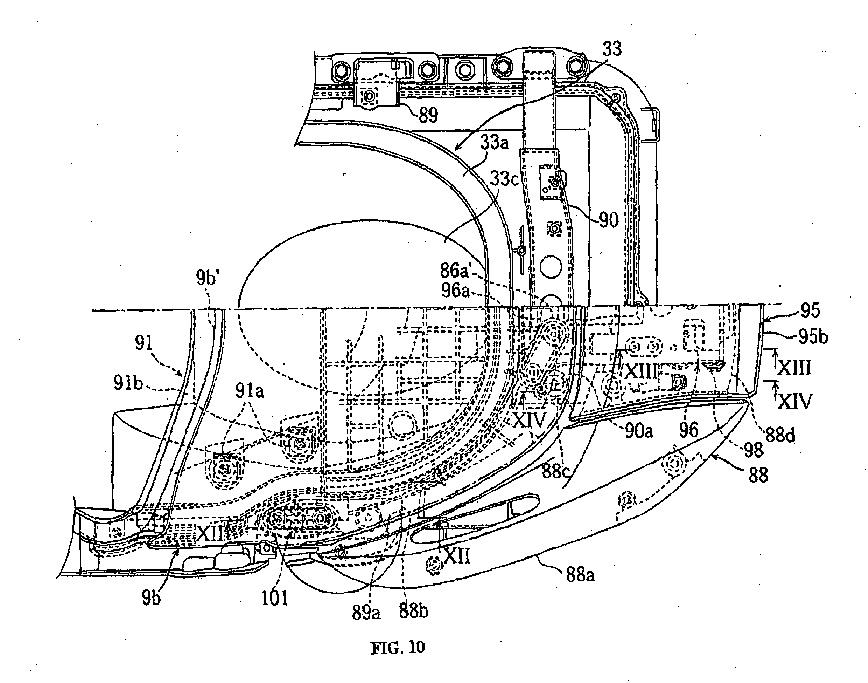

A rear hinge bracket 96 is disposed inside the tail cover 95. The hinge bracket 96 has approximately the same shape as the shape of the inner surface of the tail cover 95. Front ends 96a of the hinge bracket 96 are inserted under the tandem seat 9b, and fixed to left and right thick portions 86a' formed on the seat bottom plate 86a by bolt (see Fig. 10).

The rear hinge bracket 96 is formed by folding flanges 96d, 96d projecting downward from the left and right edges of a band-plate-shaped portion 96b extending in the front-rear direction. Hinges 96c, 96c project downward from the rear ends of the left and right flanges 96d.

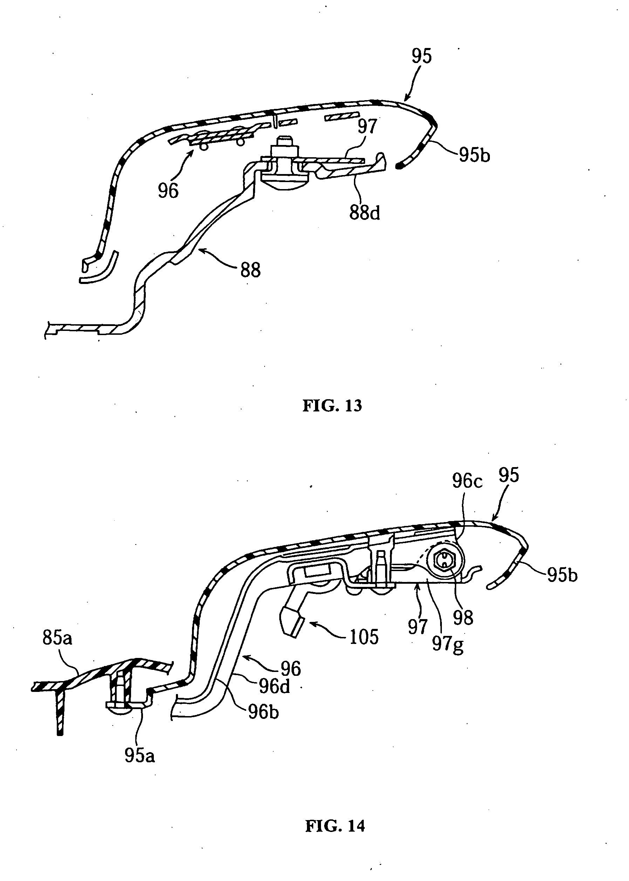

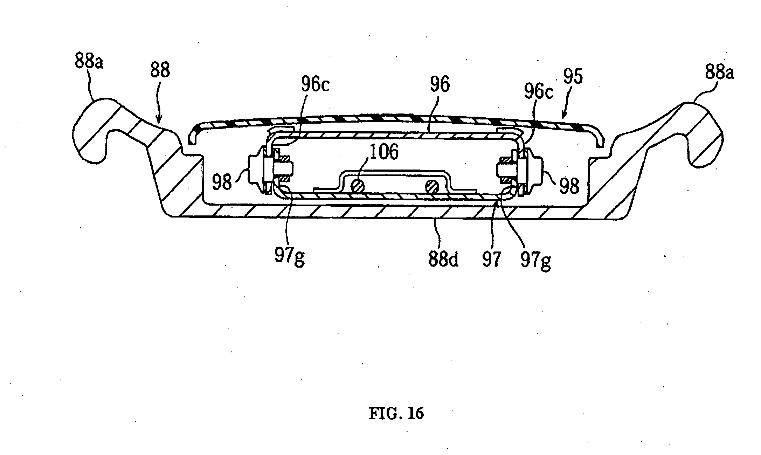

The left and right hinges 96c are pivotally supported by left and right flanges 97g of a U-shaped hinge plate 97 via left and right hinge pins 98, 98 (rear rotation axis) extending in the vehicle width direction (see Figs. 14 and 16). The hinge plate 97 is upwardly open and fixed to the connecting portion 88d by bolt. This structure allows the tandem seat 9b to rotate upward and downward around the hinge pins 98 located behind the rear end of the tandem seat 9b. The rotation center is positioned at the connecting portion 88d of the grab bar 88.

The tandem seat 9b, the grab bar 88, and the hinge bracket 96 are assembled in advance to form a sub assembly which is attached to the body frame 2.

The length from the front rotation axis 24d to the rear end of the main seat 9a in the vehicle front-rear direction is larger than the length from the rear rotation axis 98 to the front end of the tandem seat 9b. The front rotation axis 24d is located at a lower position than the position of the rear rotation axis 98.

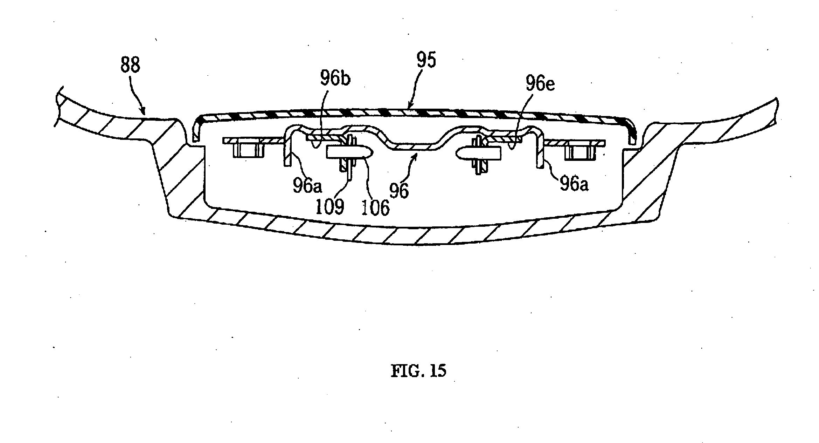

As illustrated in Figs. 15 through 20, the tandem seat 9b has a seat supporting mechanism 105 for supporting the tandem seat 9b in a self-position. The self-position is a position where the tandem seat 9b is maintained in an open self-supporting condition. Rotation of the tandem seat 9b in the closing direction is prevented by a stand 106 when the tandem seat 9b is located in the self-position.

The seat supporting mechanism 105 is disposed on the hinge bracket 96. The seat supporting mechanism 105 has a maintaining mechanism 105a for maintaining self-supporting condition of the tandem seat 9b when the tandem seat 9b is rotated to the self-position immediately before the full-open, and a releasing mechanism 105b for releasing the self-supporting condition when the tandem seat 9b is rotated to the full-open position over the self-position.

The maintaining mechanism 105a includes the stand 106 rotatably supported by the hinge bracket 96, a torsion spring 107 for urging the stand 106 to standing position or lying position, and a stopper 97a provided on the hinge plate 97. The torsion spring 107 urges the stand 106 to the standing position when the position of the tandem seat 9b lies within the angle range from the full-close position to the self-position.

The releasing mechanism 105b includes a lever 109 for switching the urging direction of the torsion spring 107, the torsion spring 107, the guide (band-plate-shaped portion of hinge bracket) 96b, and a lever guide 97c provided on the hinge plate 97. The torsion spring 107 urges the stand 106 to the lying position when the lever 109 is rotated to the releasing position, and urges the stand 106 to the standing position when the lever 109 is rotated to the standing position.

The stand 106 is formed by folding a round bar into a substantially U shape. Both ends 106a, 106a of the stand 106 are rotatably supported by supporting pieces 96e, 96e attached to the left and right sides of the hinge bracket 96.

The lever 109 has a substantially V-shape, and is rotatably supported by the supporting pieces 96e together with the ends 106a of the stand 106. One end 107a of the torsion spring 107 engages with an engaging piece 106b fixed to the stand 106, and the other end 107b engages with the lever 109. The front edge of the hinge plate 97 is folded to form a stopper 97b engaging with the lower end 106b of the stand 106.

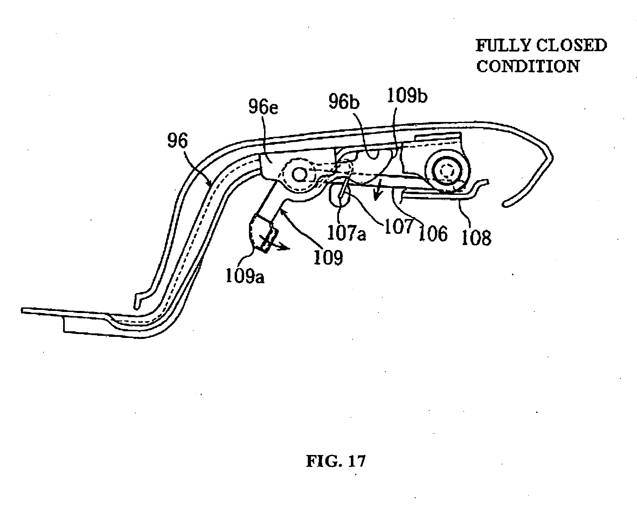

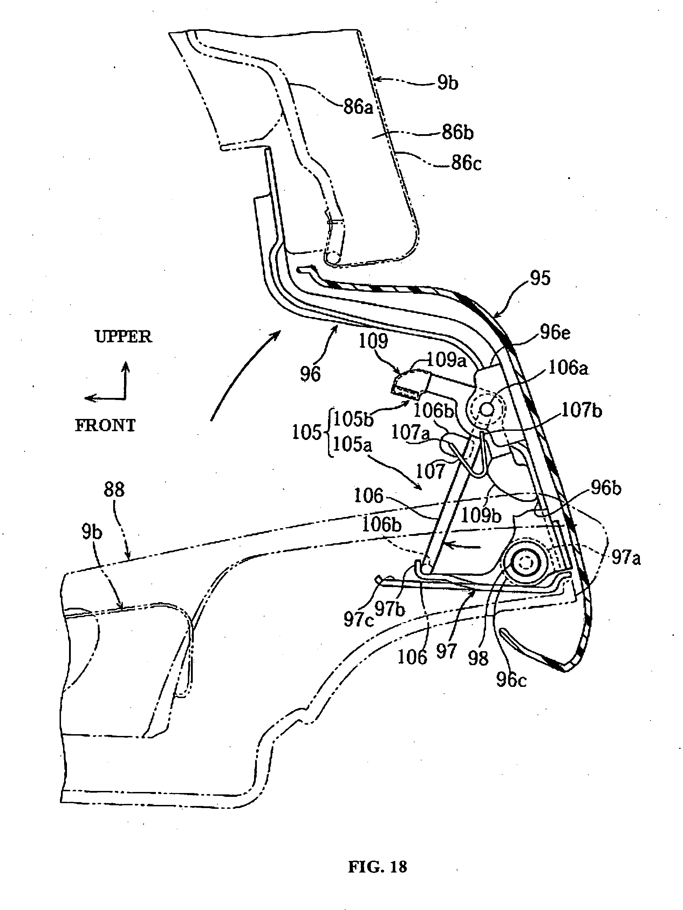

When the tandem seat 9b is at the full-close position, the stand 106 is urged to the standing position (clockwise) by the torsion spring 107 as illustrated in Fig. 17. The lever 109 is urged anticlockwise, and the contact between a rear portion 109b of the lever 109 and the guide 96b is maintained. When the tandem seat 9b under this condition is rotated to the self-position, the stand 106 is rotated clockwise and stopped by a stopper 108b. As a result, the tandem seat 9b is self-supported in the self-position (see Fig. 18).

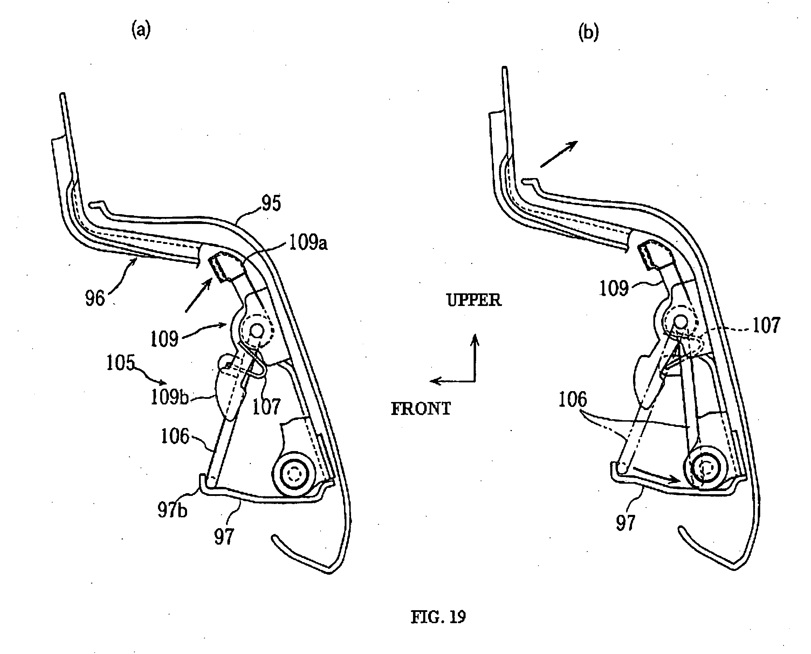

Under this condition, the lever 109 is urged to the standing position (position where a front portion 109a comes to the front and the rear portion 109b contacts the guide 96b) by the torsion spring 107. When the lever 109 is rotated clockwise against the urging force of the torsion spring 107 at the self-position, the urging direction of the torsion spring 107 is switched to a direction (anticlockwise) for urging the stand 106 to the lying position (see Fig. 19(a)). However, the stand 106 under this state is maintained at the standing condition since seat load is applied to the stand 106 (see Fig. 19(a)).

When the tandem seat 9b is rotated to the full-open position which is slightly opened from the self-position, the seat load is no longer applied to the stand 106. Thus, the stand 106 is rotated to the lying position, and the tandem seat 9b can be closed in this condition (Fig. 19(b)).

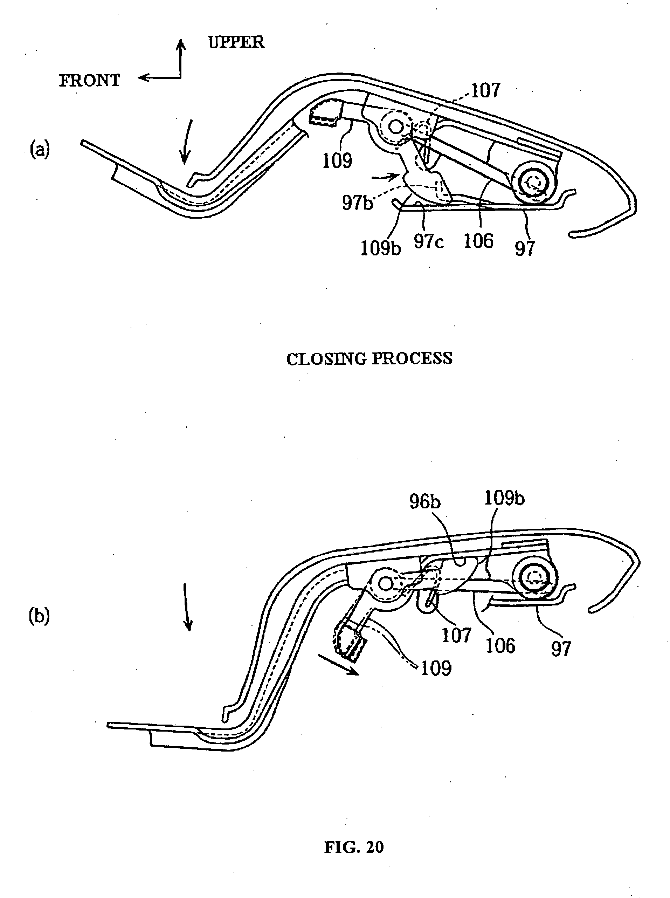

When the tandem seat 9b is closed to a position near the full-close position, the rear portion 109b of the lever 109 is rotated anticlockwise toward the original position while guided by the guide 97c. By this rotation, the stand 106 is urged in the standing direction (see Figs. 20(a), 20 (b)). Thus, when the tandem seat 9b is subsequently opened, the stand 106 is rotated to the standing position to maintain the tandem seat 9b in the standing condition.

According to this embodiment, the main seat 9a rotates upward and downward around the hinge pin 24d disposed in front of the storage box 33, and the tandem seat 9b rotates upward and downward around the hinge pins 98 disposed behind the storage box 33. The front storage area 33b of the storage box 33 is opened and closed by the main seat 9a, and the rear storage area 33c is opened and closed by the tandem seat 9b. Accordingly, the storage box 33 extends through substantially the overall length of the main seat 9a and the tandem seat 9b in the front-rear direction, and thus produces sufficient capacity for accommodating a long article.

The main seat 9a and the tandem seat 9b open to the front and rear, respectively. Thus, opening and closing operation can be easily and smoothly carried out compared with the structure in which the entire opening of the storage is opened and closed by a single large seat.

In addition, the main seat 9a can be opened with an article carried on the tandem seat 9b. Thus, the article can be easily taken in and out of the storage box 33.

According to this embodiment, the grab bar 88 attached to the body frame 2 is extended toward the rear from the rear end of the storage box 33, and the rotation center of the tandem seat 9b is positioned at the connecting portion 88d of the extended grab bar 88. Thus, the storage box 33 can be expanded toward the rear from the rear end of the tandem seat 9b, which increases the storage capacity. Moreover, the connection between the tandem seat 9b and the main seat 9a can be easily adjusted.

Since the tandem seat 9b is rotatably supported by the grab bar 88 which has high strength and rigidity and is attached to the body frame 2, the strength for supporting the seat 9b can be increased.

According to this embodiment, the left and right tandem locking units 101, 101 of the tandem seat 9b are disposed outside the left and right sides of the storage box 33, and the left and right tandem lock units 101 are connected by the wire member. In this case, the locked conditions of the left and right tandem lock units 101 can be simultaneously released by using the single key, allowing the tandem seat 9b to be locked and unlocked by a simple structure.

The left and right main lock units 100, 100 of the main seat 9a are disposed on the left and right outer side walls of the storage box 33, and the left and right main lock units 100 and the left and right tandem lock units 101 are connected by the lock release member. Thus, the locked conditions of both the main seat 9a and the tandem seat 9b can be simultaneously released by the lock release operation using the key. Since the opening and closing operation of the respective seats 9a and 9b can be carried out by one hand, the easiness of operation can be further increased. In addition, such a case where the main seat 9a and the tandem seat 9b are left unlocked is not caused.

According to this embodiment, the left and right tandem lock units 101 are attached to the left and right front legs 88b, 88b of the grab bar 88 fastened to the body frame 2. Thus, the tandem lock units 101 can be supported by the grab bar 88 having high strength and rigidity.

According to this embodiment, the waterproof structure is provided between the rear edge 9a' of the main seat 9a and the front edge 9b' of the tandem seat 9b. Thus, entrance of water through the seal change portion between the main seat 9a and the tandem seat 9b into the storage box 33 can be avoided.

According to this embodiment, the gutter-shaped receiver 93 is provided in the opening 33a of the storage box 33. In addition, the upper extension 93b is formed on the inner wall 93a of the receiver 93, and the lower extension 91e extending to overlap with the outer side of the upper extension 93b in the vehicle width direction is formed on the front edge 91b of the rear bottom plate 91. Thus, entrance of water into the storage box 33 can be more securely prevented by the simple structure.

According to this embodiment, the seat supporting mechanism 105 for holding the tandem seat 9b in the self-position is equipped. Thus, the tandem seat 9b is not suddenly closed even when the accommodated article hits the tandem seat 9b at the time of taking in and out or for other reasons. Accordingly, the article can be easily taken in and out.

The seat supporting mechanism 105 has the maintaining mechanism 105a for maintaining the self-supporting condition of the tandem seat 9b when the tandem seat 9b is rotated to the self-position, and the releasing mechanism 105b for releasing the self-supporting condition of the tandem seat 9b when the tandem seat 9b is rotated to the full-open position beyond the self-position. Thus, the opening operation and releasing operation of the tandem seat 9b can be easily carried out.

The maintaining mechanism 105a has the stand 106 rotatably supported by the hinge bracket 96, the torsion spring 107 for urging the stand 106 to the standing position or the lying position, and the stopper 97b. The torsion spring 107 urges the stand 106 to the standing position when the position of the tandem seat 9b lies within the angle range from full-close position to the self-position. Thus, the structure of the seat supporting mechanism 105 can be simplified, and the number of the components of the seat supporting mechanism 105 can be reduced.

The releasing mechanism 105b has the lever 109 for switching the urging direction of the torsion spring 107, the torsion spring 107, and the guide 97c. The torsion spring 107 urges the stand 106 to the lying position when the lever 109 is rotated to the releasing position, and urges the stand 106 to the standing position when the lever 109 is rotated to the standing position. Thus, the tandem seat 9b can be opened or closed by one hand.

According to this embodiment, the openings of the front storage area 33b, the intermediate storage area 33d, and the rear storage area 33c are connected. When both the main seat 9a and the tandem seat 9b are opened, these openings 33b, 33d and 33c are opened as one opening. Thus, a large-sized article can be easily stored and taken in and out.

The main seat 9a is longer than the tandem seat 9b, and the front rotation axis 24d for supporting the main seat 9a is located at a lower position than the position of the rear rotation axis 98. Thus, a space above the vehicle necessary for opening both the main seat 9a and the tandem seat 9b is reduced. More specifically, the main seat 9a having larger length requires a larger space above the main seat, but this space can be reduced in this embodiment by disposing the front rotation axis 24d at a low position.

Since the rear end of the main seat 9a covers the front end of the tandem seat 9b from above, the sealing between both the seats can be easily and securely provided. Moreover, the tandem seat 9b can be easily fixed only by providing the lock unit 100 on the main seat 9a.

While both the front rotation axis 24d and the rear rotation axis 98 extend in the vehicle width direction in this embodiment, each of the axes may be inclined a given angle to the vehicle width direction.

### Description of Reference Numerals and Signs

- 1: motorcycle
- 2: body frame
- 9a: main seat
- 9a': rear edge
- 9b: tandem seat
- 9b': front edge
- 24c: hinge bracket
- 24d: hinge pin (front rotation axis)
- 33: storage box (storage space)
- 33a: opening
- 33b: front storage area
- 33c: rear storage area
- 86a: seat bottom plate
- 87d: stopper
- 88: grab bar (bracket)
- 88b: front leg
- 91e: lower extension
- 93b: upper extension
- 96d: guide
- 98: hinge pin (rear rotation axis)
- 100: main lock unit (second lock unit)
- 100d: connecting member
- 101: tandem lock unit (first lock unit)
- 105: seat supporting mechanism
- 105a: maintaining mechanism
- 105b: releasing mechanism
- 106: stand
- 107: torsion spring
- 109: lever

## Claims

1. A motorcycle (1), comprising:
a storage space (33);
a main seat (9a) rotatable around a front rotation axis (24d) positioned at a front end of the storage space (33); and
a tandem seat (9b) rotatable around a rear rotation axis (98) positioned at a rear end of the storage space (33); wherein
the main seat (9a) is adapted to open and close an opening (33a') of a front region (33b) of the storage space (33) and the tandem seat (9b) is adapted to open and close an opening (33a"') of a rear region (33c) of the storage space (33),
**characterized in that** a rear end (9a') of the main seat (9a) covers a front end (9b') of the tandem seat (9b) when both the main seat (9a) and the tandem seat (9b) are in a closed position and a rear bottom plate (91) is provided in a front region of a seat bottom plate (86a) of the tandem seat (9b), a front edge (91b) of the rear bottom plate (91) projects beyond the front end (9b') of the tandem seat (9b) and a seal member (84) is provided between the main seat (9a) and the front edge (91b) of the rear bottom plate (91) to seal therebetween with pressure.

2. The motorcycle (1) according to claim 1, wherein the storage space (33) defines a front storage area (33b) positioned in a front area of the motorcycle (1), and a rear storage area (33c) positioned in a rear area of the motorcycle (1), wherein the main seat (9a) is adapted to open and close an opening (33a') of the front storage area (33b) and the tandem seat (9b) is adapted to open and close an opening (33a"') of the rear storage area (33c).

3. The motorcycle (1) according to claim 2, wherein, when both the main seat (9a) and the tandem seat (9b) are in an open position, the openings (33a', 33a"') of the front and rear storage areas (33b, 33c) collectively define a single opening (33a).

4. The motorcycle (1) according to any one of claims 1, 2 or 3, wherein both the front and rear rotation axes (24d, 98) extend in a vehicle width direction.

5. The motorcycle (1) according to any preceding claim, wherein the length from the front rotation axis (24d) to the rear end (9a') of the main seat (9a) is larger than the length from the rear rotation axis (98) to the front end (9b') of the tandem seat (9b).

6. The motorcycle (1) according to any preceding claim, wherein the front rotation axis (24d) is located at a lower position than the rear rotation axis (98).

7. The motorcycle (1) according to any preceding claim, further comprising a lock device provided at least on the main seat (9a) and adapted to lock the main seat (9a) and the tandem seat (9b) in a closed position.

8. The motorcycle (1) according to claim 7, wherein the lock device is adapted to lock at least one of the main seat (9a) and the tandem seat (9b) to the vehicle body.

9. The motorcycle (1) of claim 7 or 8, further comprising an operation member connected to the lock device and adapted to operate said lock device.

10. The motorcycle (1) of claim 7, 8 or 9, wherein the lock device is disposed on or near the side of the storage space (33) in the vehicle width direction.

11. The motorcycle (1) according to any one of claims 7 to 10, wherein the lock device has first lock units (101) disposed on or near both left and right sides of the storage space (33) in the vehicle width direction, wherein the first lock units (101) are adapted to lock the tandem seat (9b) to the vehicle body.

12. The motorcycle (1) according to any one of claims 7 to 11, wherein the lock device has second lock units (100) disposed on or near both right and left sides of the storage space (33) in the vehicle width direction and adapted to lock the main seat (9a) to the vehicle body, wherein the left lock unit and the right lock unit of the second lock units (100) are connected with each other via a connecting member (100d).

13. The motorcycle (1) according to any preceding claim, wherein a rotation center (98) of the tandem seat (9b) is located at a position behind the rear end of the storage space (33).

14. The motorcycle (1) according to claim 13, further comprising a bracket (96) that is attached to a motorcycle body frame and extends toward the rear from the rear end of the storage space, wherein the rotation center (98) of the tandem seat (9b) is positioned on the bracket (96).

15. The motorcycle (1) according to claim 14, wherein the bracket (96) defines a grab bar (88) adapted to be grabbed by a rider sitting on the tandem seat (9b) and the tandem seat (9b) is rotatably attached to the grab bar (88).

16. The motorcycle (1) according to claim 15 when dependent on claim 11, wherein the grab bar (88) comprises a leg (88b) disposed below the tandem seat (9b) and fixed to a body frame of the motorcycle (1) and the left and right first lock units (101) are fixed to the lower surface of the leg (88b).

17. The motorcycle (1) according to claim 15 or 16, wherein the tandem seat (9b), a hinge bracket (96) that supports the tandem seat (9b), and the grab bar (88) are adapted to be preassembled to define an assembly body, wherein the assembly body is adapted to be attached to the motorcycle (1).

18. The motorcycle (1) according to any preceding claim, further comprising a waterproof structure between a rear end (9a') of the main seat (9a) and a front end (9b') of the tandem seat (9b).

19. The motorcycle (1) according to any preceding claim, further comprising a lower extension (91e) extending downward from a bottom plate (86) of the tandem seat (9b) and an upper extension (93b) extending upward from a rear portion of the storage space (33), wherein the lower extension (91e) and the upper extension (93b) are overlapped with each other producing an overlapping portion in the vehicle width direction when the tandem seat (9b) is in a closed position.

20. The motorcycle (1) according to any preceding claim, wherein the tandem seat (9b) comprises a seat supporting mechanism (105) adapted to hold the tandem seat (9b) in an open self-position.

21. The motorcycle (1) according to claim 20, wherein the seat supporting mechanism (105) comprises a maintaining mechanism (105a) adapted to maintain a self-supporting condition of the tandem seat (9b) when the tandem seat (9b) is rotated to the open self-position, and a releasing mechanism (105b) adapted to release the self-supporting condition of the tandem seat (9b) when the tandem seat (9b) is rotated beyond the open self-position.

22. The motorcycle (1) according to claim 21, wherein the maintaining mechanism (105a) comprises a hinge bracket adapted to support the tandem seat (9b), a stand (106) rotatably supported by the hinge bracket, a torsion spring (107) adapted to urge the stand (106) to a standing position or a lying position, and a stopper engaging with the stand (106), wherein the torsion spring (107) is adapted to urge the stand (106) to the standing position when the position of the tandem seat (9b) lies within the angle range from the open self-position to a full-close position.

23. The motorcycle (1) according to claim 22, wherein the releasing mechanism (105b) comprises the torsion spring (107) adapted to urge the stand (106) to the standing position or the lying position and a lever (109) adapted to switch the urging direction of the torsion spring (107), and a guide for guiding the lever (109), wherein the torsion spring (107) is adapted to urge the stand (106) to the lying position when the lever (109) is rotated to a releasing position and adapted to urge the stand (106) to the standing position when the lever (109) is rotated to a standing position.

## Patentansprüche

1. Motorrad (1), das Folgendes umfasst:
einen Aufbewahrungsraum (33),
einen um eine vordere Drehachse (24d) drehbaren Hauptsitz (9a), der an einem vorderen Ende des Aufbewahrungsraums (33) angeordnet ist, und
einen um eine hintere Drehachse (98) drehbaren Beifahrersitz (9b), der an einem hinteren Ende des Aufbewahrungsraums (33) angeordnet ist, wobei
der Hauptsitz (9a) dafür eingerichtet ist, eine Öffnung (33a') eines vorderen Gebietes (33b) des Aufbewahrungsraums (33) zu öffnen und zu schließen, und der Beifahrersitz (9b) dafür eingerichtet ist, eine Öffnung (33a"') eines hinteren Gebietes (33c) des Aufbewahrungsraums (33) zu öffnen und zu schließen,
**dadurch gekennzeichnet, dass** ein hinteres Ende (9a') des Hauptsitzes (9a) ein vorderes Ende (9b') des Beifahrersitzes (9b) abdeckt, wenn sich sowohl der Hauptsitz (9a) als auch der Beifahrersitz (9b) in einer geschlossenen Stellung befinden, und eine hintere Bodenplatte (91) in einem vorderen Gebiet einer Sitzbodenplatte (86a) des Beifahrersitzes (9b) bereitgestellt wird, wobei eine Vorderkante (91b) der hinteren Bodenplatte (91) über das vordere Ende (9b') des Beifahrersitzes (9b) hinaus vorspringt und ein Dichtungselement (84) zwischen dem Hauptsitz (9a) und der Vorderkante (91b) der hinteren Bodenplatte (91) bereitgestellt wird, um zwischen denselben mit Druck abzudichten.

2. Motorrad (1) nach Anspruch 1, wobei der Aufbewahrungsraum (33) einen vorderen Aufbewahrungsbereich (33b), der in einem vorderen Bereich des Motorrades (1) angeordnet ist, und einen hinteren Aufbewahrungsbereich (33c), der in einem hinteren Bereich des Motorrades (1) angeordnet ist, definiert, wobei der Hauptsitz (9a) dafür eingerichtet ist, eine Öffnung (33a') des vorderen Aufbewahrungsbereichs (33b) zu öffnen und zu schließen, und der Beifahrersitz (9b) dafür eingerichtet ist, eine Öffnung (33a"') des hinteren Aufbewahrungsbereichs (33c) zu öffnen und zu schließen.

3. Motorrad (1) nach Anspruch 2, wobei, wenn sich sowohl der Hauptsitz (9a) als auch der Beifahrersitz (9b) in einer offenen Stellung befinden, die Öffnungen (33a', 33a"') des vorderen und des hinteren Aufbewahrungsbereichs (33b, 33c) gemeinsam eine einzige Öffnung (33a) bilden.

4. Motorrad (1) nach einem der Ansprüche 1, 2 oder 3, wobei sich sowohl die vordere als auch die hintere Drehachse (24d, 98) in einer Fahrzeug-Breitenrichtung erstrecken.

5. Motorrad (1) nach einem der vorhergehenden Ansprüche, wobei die Länge von der vorderen Drehachse (24d) bis zu dem hinteren Ende (9a') des Hauptsitzes (9a) größer ist als die Länge von der hinteren Drehachse (98) bis zu dem vorderen Ende des Beifahrersitzes (9b).

6. Motorrad (1) nach einem der vorhergehenden Ansprüche, wobei die vordere Drehachse (24d) an einer niedrigeren Position angeordnet ist als die hintere Drehachse (98).

7. Motorrad (1) nach einem der vorhergehenden Ansprüche, das ferner eine Verriegelungseinrichtung umfasst, die wenigstens an dem Hauptsitz (9a) bereitgestellt wird und dafür eingerichtet ist, den Hauptsitz (9a) und den Beifahrersitz (9b) in einer geschlossenen Stellung zu verriegeln.

8. Motorrad (1) nach Anspruch 7, wobei die Verriegelungseinrichtung dafür eingerichtet ist, wenigstens eine der Komponenten Hauptsitz (9a) und Beifahrersitz (9b) an dem Fahrzeugaufbau zu verriegeln.

9. Motorrad (1) nach Anspruch 7 oder 8, das ferner ein Betätigungselement umfasst, das mit der Verriegelungseinrichtung verbunden und dafür eingerichtet ist, die Verriegelungseinrichtung zu betätigen.

10. Motorrad (1) nach Anspruch 7, 8 oder 9, wobei die Verriegelungseinrichtung auf oder nahe der Seite des Aufbewahrungsraums (33) in der Fahrzeug-Breitenrichtung angeordnet ist.

11. Motorrad (1) nach einem der Ansprüche 7 bis 10, wobei die Verriegelungseinrichtung erste Verriegelungseinheiten (101) hat, die auf oder nahe sowohl der linken als auch der rechten Seite des Aufbewahrungsraums (33) in der Fahrzeug-Breitenrichtung angeordnet sind, wobei die ersten Verriegelungseinheiten (101) dafür eingerichtet sind, den Beifahrersitz (9b) an dem Fahrzeugaufbau zu verriegeln.

12. Motorrad (1) nach einem der Ansprüche 7 bis 11, wobei die Verriegelungseinrichtung zweite Verriegelungseinheiten (100) hat, die auf oder nahe sowohl der rechten als auch der linken Seite des Aufbewahrungsraums (33) in der Fahrzeug-Breitenrichtung angeordnet und dafür eingerichtet sind, den Hauptsitz (9a) an dem Fahrzeugaufbau zu verriegeln, wobei die linke Verriegelungseinheit und die rechte Verriegelungseinheit der zweiten Verriegelungseinheiten (100) über ein Verbindungselement (100d) miteinander verbunden sind.

13. Motorrad (1) nach einem der vorhergehenden Ansprüche, wobei ein Drehungsmittelpunkt (98) des Beifahrersitzes (9b) an einer Position hinter dem hinteren Ende des Aufbewahrungsraums (33) angeordnet ist.

14. Motorrad (1) nach Anspruch 13, das ferner eine Stütze (96) umfasst, die an einem Motorradaufbau-Rahmen befestigt ist und sich von dem hinteren Ende des Aufbewahrungsraums aus nach hinten erstreckt, wobei der Drehungsmittelpunkt (98) des Beifahrersitzes (9b) auf der Stütze (96) angeordnet ist.

15. Motorrad (1) nach Anspruch 14, wobei die Stütze (96) eine Griffstange (88) definiert, die dafür eingerichtet ist, durch einen auf dem Beifahrersitz (9b) sitzenden Fahrer ergriffen zu werden, und der Beifahrersitz (9b) drehbar an der Griffstange (88) befestigt ist.

16. Motorrad (1) nach Anspruch 15, soweit abhängig von Anspruch 11, wobei die Griffstange (88) einen Schenkel (88b) umfasst, der unter dem Beifahrersitz (9b) angeordnet und an einem Aufbaurahmen (1) des Motorrades befestigt ist, und die linke und die rechte erste Verriegelungseinheit (101) an der unteren Fläche des Schenkels (88b) befestigt sind.

17. Motorrad (1) nach Anspruch 15 oder 16, wobei der Beifahrersitz (9b), eine Scharnierstütze (96), die den Beifahrersitz (9b) stützt, und die Griffstange (88) dafür eingerichtet sind, vormontiert zu werden, um einen Baugruppenkorpus zu definieren, wobei der Baugruppenkorpus dafür eingerichtet ist, an dem Motorrad (1) befestigt zu werden.

18. Motorrad (1) nach einem der vorhergehenden Ansprüche, das ferner eine wasserdichte Struktur zwischen einem hinteren Ende (9a') des Hauptsitzes (9a) und einem vorderen Ende (9b') des Beifahrersitzes (9b) umfasst.

19. Motorrad (1) nach einem der vorhergehenden Ansprüche, das ferner eine untere Verlängerung (91e), die sich von einer Bodenplatte (86) des Beifahrersitzes (9b) aus nach unten erstreckt, und eine obere Verlängerung (93b), die sich von einem hinteren Abschnitt des Aufbewahrungsraums (33) aus nach oben erstreckt, umfasst, wobei die untere Verlängerung (91e) und die obere Verlängerung (93b) miteinander überlappt werden, was einen überlappenden Abschnitt in der Fahrzeug-Breitenrichtung erzeugt, wenn sich der Beifahrersitz (9b) in einer geschlossenen Stellung befindet.

20. Motorrad (1) nach einem der vorhergehenden Ansprüche, wobei der Beifahrersitz (9b) einen Sitzstützmechanismus (105) umfasst, der dafür eingerichtet ist, den Beifahrersitz (9b) in einer offenen Eigenstellung zu halten.

21. Motorrad (1) nach Anspruch 20, wobei der Sitzstützmechanismus (105) einen Haltemechanismus (105a), der dafür eingerichtet ist, einen selbsttragenden Zustand des Beifahrersitzes (9b) aufrechtzuerhalten, wenn der Beifahrersitz (9b) zu der offenen Eigenstellung gedreht wird, und einen Lösemechanismus (105b), der dafür eingerichtet ist, den selbsttragenden Zustand des Beifahrersitzes (9b) zu lösen, wenn der Beifahrersitz (9b) über die offene Eigenstellung hinaus gedreht wird, umfasst.

22. Motorrad (1) nach Anspruch 21, wobei der Haltemechanismus (105a) eine Scharnierstütze, die dafür eingerichtet ist, den Beifahrersitz (9b) zu stützen, einen Ständer (106), der durch die Scharnierstütze drehbar gestützt wird, eine Verdrehungsfeder (107), die dafür eingerichtet ist, den Ständer (106) zu einer stehenden Stellung oder einer liegenden Stellung zu drücken, und einen Anschlag, der mit dem Ständer (106) ineinandergreift, umfasst, wobei die Verdrehungsfeder (107) dafür eingerichtet ist, den Ständer (106) zu der stehenden Stellung zu drücken, wenn die Stellung des Beifahrersitzes (9b) innerhalb des Winkelbereichs von der offenen Eigenstellung bis zu einer vollständig geschlossenen Stellung liegt.

23. Motorrad (1) nach Anspruch 22, wobei der Lösemechanismus (105b) die Verdrehungsfeder (107), die dafür eingerichtet ist, den Ständer (106) zu der stehenden Stellung oder der liegenden Stellung zu drücken, und einen Hebel (109), der dafür eingerichtet ist, die Drückrichtung der Verdrehungsfeder (107) umzuschalten, und eine Führung zum Führen des Hebels (109) umfasst, wobei die Verdrehungsfeder (107) dafür eingerichtet ist, den Ständer (106) zu der liegenden Stellung zu drücken, wenn der Hebel (109) zu einer Lösestellung gedreht wird, und dafür eingerichtet ist, den Ständer (106) zu der stehenden Stellung zu drücken, wenn der Hebel (109) zu einer stehenden Stellung gedreht wird.

## Revendications

1. Motocycle (1), comprenant:
un espace de rangement (33);
un siège principal (9a), pouvant tourner autour d'un axe de rotation avant (24d), positionné au niveau d'une extrémité avant de l'espace de rangement (33) ; et
un siège tandem (9b) pouvant tourner autour d'un axe de rotation arrière (98), positionné au niveau d'une extrémité arrière de l'espace de rangement (33) ; dans lequel
le siège principal (9a) est adapté pour ouvrir et fermer une ouverture (33a') d'une région avant (33b) de l'espace de rangement (33), le siège tandem (9b) étant adapté pour ouvrir et fermer une ouverture (33a"') d'une région arrière (33c) de l'espace de rangement (33) ;
**caractérisé en ce qu'**une extrémité arrière (9a') du siège arrière (9a) recouvre une extrémité avant (9b') du siège tandem (9b) lorsque le siège principal (9a) et le siège tandem (9b) se trouvent dans une position fermée, une plaque inférieure arrière (91) étant agencée dans une région avant d'une plaque inférieure du siège (86a) du siège tandem (9b), un bord avant (91b) de la plaque inférieure arrière (91) débordant au-delà de l'extrémité avant (9b') du siège tandem (9b), et un élément de joint (84) étant agencé entre le siège principal (9a) et le bord avant (91b) de la plaque inférieure arrière (91), afin d'établir une étanchéité par pression entre eux.

2. Motocycle (1) selon la revendication 1, dans lequel l'espace de rangement (33) définit une zone de rangement avant (33b), positionnée dans une zone avant du motocycle (1), et une zone de rangement arrière (33c), positionnée dans une zone arrière du motocycle (1), le siège principal (9a) étant adapté pour ouvrir et fermer une ouverture (33a') de la zone de rangement avant (33b) et le siège tandem (9b) étant adapté pour ouvrir et fermer une ouverture (33a"') de la zone de rangement arrière (33c).

3. Motocycle (1) selon la revendication 2, dans lequel, lorsque le siège principal (9a) et le siège tandem (9b) se trouvent dans une position ouverte, les ouvertures (33a', 33a"') des zones de rangement avant et arrière (33b, 33c) définissent ensemble une seule ouverture (33a).

4. Motocycle (1) selon l'une quelconque des revendications 1, 2 ou 3, dans lequel les axes de rotation avant et arrière (24d, 98) s'étendent dans une direction de la largeur du véhicule.

5. Motocycle (1) selon l'une quelconque des revendications précédentes, dans lequel la longueur entre l'axe de rotation avant (24d) et l'extrémité arrière (9a') du siège principal (9a) est supérieure à la longueur entre l'axe de rotation arrière (98) et l'extrémité avant (9b') du siège tandem (9b).

6. Motocycle (1) selon l'une quelconque des revendications précédentes, dans lequel l'axe de rotation avant (24d) est agencé au niveau d'une position plus basse que l'axe de rotation arrière (98).

7. Motocycle (1) selon l'une quelconque des revendications précédentes, comprenant en outre un dispositif de verrouillage agencé au moins sur le siège principal (9a) et adapté pour verrouiller le siège principal (9a) et le siège tandem (9b) dans une position fermée.

8. Motocycle (1) selon la revendication 7, dans lequel le dispositif de verrouillage est adapté pour verrouiller au moins un siège, le siège principal (9a) ou le siège tandem (9b), sur la carrosserie du véhicule.

9. Motocycle (1) selon les revendications 7 ou 8, comprenant en outre un élément opérationnel, raccordé au dispositif de verrouillage et adapté pour actionner ledit dispositif de verrouillage.

10. Motocycle (1) selon les revendications 7, 8 ou 9, dans lequel le dispositif de verrouillage est agencé sur le côté de l'espace de rangement (33) ou près de celui-ci, dans la direction de la largeur du véhicule.

11. Motocycle (1) selon l'une quelconque des revendications 7 à 10, dans lequel le dispositif de verrouillage comporte des premières unités de verrouillage (101) agencées sur les côtés de gauche et de droite de l'espace de rangement (33), ou près de ceux-ci, dans la direction de la largeur du véhicule, les premières unités de verrouillage (101) étant adaptées pour verrouiller le siège tandem (9b) sur la carrosserie du véhicule.

12. Motocycle (1) selon l'une quelconque des revendications 7 à 11, dans lequel le dispositif de verrouillage comporte des deuxièmes unités de verrouillage (100), agencées sur les côtés de droite et de gauche de l'espace de rangement (33), ou près de ceux-ci, dans la direction de la largeur du véhicule, et adaptées pour verrouiller le siège principal (9a) sur la carrosserie du véhicule, l'unité de verrouillage de gauche et l'unité de verrouillage de droite des deuxièmes unités de verrouillage (100) étant raccordées l'une à l'autre par l'intermédiaire d'un élément de raccordement (100d).

13. Motocycle (1) selon l'une quelconque des revendications précédentes, dans lequel un centre de rotation (98) du siège tandem (9b) est agencé au niveau d'une position située derrière l'extrémité arrière de l'espace de rangement (33).

14. Motocycle (1) selon la revendication 13, comprenant en outre une console (96) fixée sur un châssis de la carrosserie du motocycle et s'étendant vers l'arrière à partir de l'extrémité arrière de l'espace de rangement, le centre de rotation (98) du siège tandem (9b) étant positionné sur la console (96).

15. Motocycle (1) selon la revendication 14, dans lequel la console (96) définit une barre d'appui (88) adaptée pour être saisie par un motocycliste assis sur le siège tandem (9b), le siège tandem (9b) étant fixé de manière rotative sur la barre d'appui (88).

16. Motocycle (1) selon la revendication 15, dépendant de la revendication 11, dans lequel la barre d'appui (88) comprend une branche (88b) agencée au-dessous du siège tandem (9b) et fixée sur le châssis de la carrosserie du motocycle (1), les premières unités de verrouillage de gauche et de droite (101) étant fixées sur la surface inférieure de la branche (88b).

17. Motocycle (1) selon les revendications 15 ou 16, dans lequel le siège tandem (9b), une console articulée (96), supportant les siège tandem (9b), et la barre d'appui (88) sont adaptés pour être assemblés d'avance, afin de définir un corps d'assemblage, le corps d'assemblage étant adapté pour être fixé sur le motocycle (1).

18. Motocycle (1) selon l'une quelconque des revendications précédentes, comprenant en outre une structure étanche à l'eau entre une extrémité arrière (9a') du siège principal (9a) et une extrémité avant (9b') du siège tandem (9b).

19. Motocycle (1) selon l'une quelconque des revendications précédentes, comprenant en outre une extension inférieure (91e), s'étendant vers le bas à partir d'une plaque inférieure (86) du siège tandem (9b), et une extension supérieure (93b), s'étendant vers le haut à partir d'une partie arrière de l'espace de rangement (33), l'extension inférieure (91e) et l'extension supérieure (93b) se chevauchant mutuellement, établissant une partie à chevauchement dans la direction de la largeur du véhicule lorsque le siège tandem (9b) se trouve dans une position fermée.

20. Motocycle (1) selon l'une quelconque des revendications précédentes, dans lequel le siège tandem (9b) comprend un mécanisme de support du siège (105), adapté pour retenir le siège tandem (9b) dans une position automatique ouverte.

21. Motocycle (1) selon la revendication 20, dans lequel le mécanisme de support du siège (105) comprend un mécanisme de maintien (105a), adapté pour maintenir un état à support automatique du siège tandem (9b) lorsque le siège tandem (9b) est tourné vers la position automatique ouverte, et un mécanisme de dégagement (105b), adapté pour dégager l'état à support automatique du siège tandem (9b) lorsque le siège tandem (9b) est tourné au-delà de la position automatique ouverte.

22. Motocycle (1) selon la revendication 21, dans lequel le mécanisme de maintien (105a) comprend une console articulée adaptée pour supporter le siège tandem (9b), une béquille (106), supportée de manière rotative par la console articulée, un ressort de torsion (107), adapté pour pousser la béquille (106) vers une position debout ou une position couchée, et un arrêt s'engageant dans la béquille (106), le ressort de torsion (107) étant adapté pour pousser la béquille (106) vers la position debout lorsque la position du siège tandem (9b) se situe dans un intervalle d'angles allant de la position automatique ouverte vers une position entièrement fermée.

23. Motocycle (1) selon la revendication 22, dans lequel le mécanisme de dégagement (105b) comprend le ressort de torsion (107), adapté pour pousser la béquille (106) vers la position debout ou la position couchée, un levier (109), adapté pour commuter la direction de poussée du ressort de torsion (107), et un guide pour guider le levier (109), le ressort de torsion (107) étant adapté pour pousser la béquille (106) vers la position couchée lorsque le levier (109) est tourné vers une position de dégagement, et étant adapté pour pousser la béquille (106) vers la position debout lorsque le levier (109) est tourné vers une position débout.
